Europäisches Patentamt

European Patent Office

Office européen des brevets

(11) Veröffentlichungsnummer: **0 258 932**
**A2**

(12) **EUROPÄISCHE PATENTANMELDUNG**

(21) Anmeldenummer: **87201580.5**

(22) Anmeldetag: **21.08.87**

(51) Int. Cl.⁴: **G11B 7/24 , G11B 7/26**

(30) Priorität: **23.08.86 DE 3628701**

(43) Veröffentlichungstag der Anmeldung:
**09.03.88 Patentblatt 88/10**

(84) Benannte Vertragsstaaten:
**AT BE CH DE ES FR GB GR IT LI NL SE**

(71) Anmelder: **Philips and Du Pont Optical Deutschland GmbH**
**Podbielskistrasse 164**
**D-3000 Hannover 1(DE)**

(84) **DE**

(71) Anmelder: **Philips and Du Pont Optical Company**
**Buizerdlaan 2**
**NL-3435 SB Nieuwegein(NL)**

(84) **BE CH ES FR GB GR IT LI NL SE AT**

(72) Erfinder: **Schulz,Dieter, Dipl.-Ing.**
**An der Christuskirche 19**
**D-3000 Hannover 1(DE)**
Erfinder: **Haase, Gerald**
**Peiner Strasse 35**
**D-3014 Laatzen 13(DE)**

(74) Vertreter: **Kupfermann, Fritz-Joachim, Dipl.-Ing.**
**Philips Patentverwaltung GmbH**
**Wendenstrasse 35 Postfach 10 51 49**
**D-2000 Hamburg 1(DE)**

(54) **Optisch auslesbarer plattenförmiger Informationsträger.**

(57) Ein optisch auslesbarer plattenförmiger Informationsträger weist eine transparente Grundplatte und eine Informationsstruktur auf, die durch die Grundplatte hindurch in Reflektion auslesbar ist. Die Informationsstruktur ist in einer galvanisch hergestellten Metallplatte eingeprägt, die mittels eines Klebstoffes mit ihrer die Informationsstruktur aufweisenden Seite auf die Grundplatte aufgeklebt ist.

Fig.3

## Optisch auslesbarer plattenförmiger Informationsträger

Die Erfindung bezieht sich auf einen optisch auslesbaren plattenförmigen Informationsträger, der eine transparente Grundplatte und eine Informationsstruktur aufweist, die durch die Grundplatte hindurch in Reflektion auslesbar ist.

Derartige Informationsträger sind beispielsweise bekannt als Compact Disc. Bei diesen Compact Discs und auch bei anderen, auf ähnliche Weise wie diese hergestellten plattenförmigen Informationsträgern besteht bislang die Notwendigkeit, die Qualität einer Preßmatrize, mit der die Platten im Spritzguß-bzw. Spritzpreßverfahren hergestellt werden sollen, durch Fertigung von Probeplatten zu überprüfen. Dies bedeutet also, daß von einer solchen Matrize etliche Compact Disc hergestellt werden. Dies geschieht in der gleichen Art und Weise wie auch bei der späteren Serienfertigung auf Maschinen für die Serienfertigung von Compact Disc. Die Herstellung der Prüfmuster zur Überprüfung der Qualität der Matrize belegt damit Fertigungskapazität für die Herstellung der Serienplatten. Dieses Problem wird noch dadurch verschärft, daß besondere Rüstzeiten entstehen, da für jede Überprüfung einer Matrize die Preßmaschine erst eingerichtet werden muß. Hinzu kommt, daß in größeren Fertigungsstätten pro Tag etliche Matrizen überprüft werden müssen, so daß ein beträchtlicher Teil der Fertigungskapazität nur wegen der Überprüfung der Preßmatrizen für die Serienfertigung ausfällt.

Es ist Aufgabe der Erfindung, eine Möglichkeit zu schaffen, die Qualität der Preßmatrizen zu überprüfen, ohne spezielle Prüfmuster von der Matrize zu pressen und damit die bisher durch Prüfmuster belegten Fertigungskapazitäten freizuhalten.

Diese Aufgabe wird erfindungsgemäß dadurch gelöst, daß die Informationsstruktur in einer galvanisch hergestellten Metallplatte vorgesehen ist und daß diese Metallplatte mit ihrer die Informationsstruktur aufweisenden Seite auf die Grundplatte aufgeklebt ist.

Die die Informationsstruktur enthaltende Metallplatte kann, ebenso wie konventionelle Platten, durch die transparente Grundplatte hindurch ausgelesen werden. Dies ermöglicht eine direkte Kontrolle der Qualität der Informationsstruktur der Metallplatte, beispielsweise einer Preßmatrize. Die Beurteilung der Qualität einer Preßmatrize ist sogar genauer möglich als bei der Prüfung mittels mit der Matrize gepreßter Prüfmuster, da die beim Probepressen möglicherweise entstehenden Fehler wegfallen.

Darüber hinaus besteht die Möglichkeit, den plattenförmigen Informationsträger nach der Erfindung gegebenenfalls auch zur Herstellung eines sogenannten Sekundär-Masters zu verwenden. Wird nämlich beispielsweise der Original-Master, von dem die Matrizen gewonnen wurden, beschädigt, so besteht die Möglichkeit, von dem erfindungsgemäßen plattenförmigen Informationsträger fehlerfrei dessen Information auszulesen und wieder auf ein Magnetband zu überspielen. Von diesem Magnetband kann dann wiederum ein neuer Master gewonnen werden, wie dies prinzipiell auch bei der Herstellung des Original-Masters geschieht.

Der erfindungsgemäße plattenförmige Informationsträger wird also im allgemeinen dann von besonderem Vorteil sein, wenn es bei der Herstellung von optisch auslesbaren plattenförmigen Informationsträgern um die Überprüfung der Qualität von Preßmatrizen und damit natürlich auch der Qualität der vorher vollzogenen Vervielfältigungsschritte, die schließlich zur Matrize geführt haben, geht. Darüber hinaus ist es jedoch auch für sehr kleine Serien von plattenförmigen Informationsträgern einer bestimmten Information möglich, die üblicherweise als Preßmatrizen eingesetzten die Informationsstruktur enthaltenen Metallplatten auf erfindungsgemäße Weise direkt als abspielbare Informationsträger zu verwenden, d.h. also von ihnen keine weiteren Platten zu pressen. Bei sehr kleinen Serien entfiele damit die Notwendigkeit, überhaupt ein Spritzgußbzw. Spritzpreßverfahren einzusetzen. Dies könnte auch dann von Interesse sein, wenn es auf extreme Datensicherheit ankommt, d.h. also, wenn eventuelle Spritzgußbzw. Spritzpreßfehler mit Sicherheit vermieden werden sollen.

Der besondere Vorteil des erfindungsgemäßen optisch auslesbaren plattenförmigen Informationsträgers besteht darin, daß die Überprüfung von Matrizen unter den gleichen optischen Randbedingungen ermöglicht wird, wie sie auch beim Abtasten mittels der Matrizen hergestellter plattenförmiger Infomationsträger gegeben sind. Dies ist deshalb von besonderer Bedeutung, weil die bei der Abtastung vorhandenen optischen Randbedingungen eine besondere Rolle für die Beurteilung der Qualität des abgetasteten Informationsträgers liefern. Will man also eine Preßmatrize bzw. ein Galvano auf dessen Qualität hin überprüfen, so ist es besonders wichtig, daß bei dieser optischen Überprüfung die gleichen optischen Randbedingungen gegeben sind wie bei späteren Informationsträgern.

Aus diesem Grunde ist es beispielsweise nicht vorteilhaft, die Preßmatrizen direkt, d. h. also ohne sie auf eine transparente Grundplatte abgeklebt zu haben, optisch abzutasten. In diesem Fall ist nämlich im Bereich des abtastenden Laserstrahls bis hin zur Informationsstruktur der Preßmatrize lediglich Luft. Diese hat einen Brechungsindex von Eins. Bei Abtastung eines Informationsträgers mit einer transparenten Grundplatte, wie beispielsweise einer Compact-Disc, ist jedoch zusätzlich die transparente Grundplatte vorhanden, welche einen Brechungsindex aufweist, der größenordnungsmäßig etwa 1,5 beträgt. Die gesamte Optik des abspielenden Gerätes und die Wellenlänge des abtastenden Laserstrahles ist nun auf diese transparente Grundplatte mit ihrem Brechungsindex ausgelegt. Dies bedeutet, daß die Fokussierung in diesem Falle optimal ist und daß auch die Interferenz, die zwischen von erhöhten und von niedrigeren Bereichen der Informationsstruktur reflektiertem Licht entsteht, einen optimalen Wert annimmt. Bei Fehlen der transparenten Grundplatte ist im optischen Bereich vor der Informationsstruktur lediglich Luft vorhanden, die einen kleineren Brechungsindex aufweist. Dies hat zum einen zur Folge, daß die Fokussierung des abspielenden Gerätes nicht optimal arbeitet. Außerdem ist jedoch die Interferenz nicht mehr optimal, da der Laserstrahl in Luft eine andere Ausbreitungsgeschwindigkeit hat als in Glas. Dies hat zur Folge, daß die Modulation des reflektierten Lichtstrahles, je nachdem ob dieser auf einen erhöhten oder niedrigeren Bereich der Informationsstruktur trifft, nicht mehr optimal ist. Damit ist bei einem solchen plattenförmigen Informationsträger eine optimale Bewertung der Qualität der Informationsstruktur mit einem auf konventionelle Informationsträger ausgelegten Gerät nicht mehr möglich. Die erfindungsgemäß vorgesehene transparente Grundplatte hat also den Vorteil, daß die Informationsstruktur einer galvanisch heregestellten Metallplatte unter den gleichen optischen Randbedingungen ausgelesen werden kann, wie sie auch beim Abtasten späterer, mittels der Metallplatte hergestellten Informationsträgern gegeben sind, welche ja auch eine transparente Grundplatte aufweisen.

Darüber hinaus ist durch das Aufkleben der galvanisch hergestellten Metallplatte auf die transparente Grundplatte sichergestellt, daß die Metallplatte mit ihrer Informationsstruktur sich nicht verwindet. Dies ist beim Abtasten und somit beim überprüfen der Qualität der Informationsstruktur auf der Metallplatte von großer Bedeutung.

Anstelle einer Metallplatte können zur Herstellung plattenförmiger Informationsträger auch Matrizen aus Kunststoff eingesetzt werden. Selbstverständlich ist die Erfindung auch auf derartige Kunststoff-Matrizen anwendbar, die ebenfalls mit ihrer Informationsstruktur auf die transparente Grundplatte aufgeklebt sind.

Nach einer weiteren Ausgestaltung der Erfindung ist vorgesehen, daß die Grundplatte der plattenförmigen Informationsträger aus Glas besteht. Die Verwendung von Glas als Grundplatte gibt dem plattenförmigen Informationsträger die notwendige Stabilität. Darüber hinaus ist Glas wirtschaftlich herstellbar und bietet auch die notwendige Reinheit des Materials. Darüber hinaus ist die Oberfläche von Glas auf relativ einfache Weise sehr glatt herzustellen, was von besonderer Bedeutung ist, da beim optischen Auslesen des Informationsträgers keine zu starke Brechung bzw. Streuung des die Information auslesenden Lichtstrahls eintreten darf.

Nach einer weiteren Ausgestaltung der Erfindung ist vorgesehen, daß die Metallplatte ein auf galvanischem Wege von einem Master gewonnenes Galvano ist.

Von einem Glasmaster werden üblicherweise auf galvanischem Wege in mehreren Schritten Galvanos hergestellt, die die Information in positiver bzw. negativer Form enthalten. Das erste, vom Master gewonnene Galvano, das sogenannte Vater-Galvano, enthält die Information in megativer Form. Ein vom Vater-Galvano gewonnenes, sogenanntes Mutter-Galvano trägt die Information in positiver Form. Von einem solchen Mutter-Galvano werden nun im allgemeinen mehrere sogenannte Söhne wiederum auf galvanischem Wege gewonnen, die die Information in negativer Form enthalten und die im Regelfalle als Preßmatrizen eingesetzt werden.

Als Metallplatte für die erfindungsgemäße Informationsträgerplatte kann, je nach zu überprüfender Fertigungsstufe, eines dieser Galvanos Einsatz finden, wobei bei Einsatz eines die Information in positiver Form enthaltenden Galvanos ein entsprechend eingerichtetes Abspielgerät vorzusehen ist.

Nach einer weiteren Ausgestaltung der Erfindung ist vorgesehen, daß die Metallplatte eine Preßmatrize ist, die die Informationsstruktur in negativer Form aufweist.

Ist die Informationsstruktur in der Metallplatte in negativer Form eingebracht, d.h. also genauso wie bei einer später mit der Matrize zu fertigenden Platte, so besteht die Möglichkeit, die erfindungsgemäß hergestellte Platte in einem konventionellen Abspielgerät abzuspielen und zu überprüfen. Der scheinbare Widerspruch, daß eine Metallplatte, die die Informationsstruktur in negativer Form enthält, genauso abspielbar ist wie eine auf konventionellem Wege gepreßte Platte, die die Information in positiver Form enthält, erklärt sich dadurch, daß die auf konventionellem Wege gepreßte Platte durch den transparenten Träger hindurch ausgelesen wird, d. h. also daß auch die Informationsstruktur von ihrer Rückseite ausgelesen wird. Demgegenüber wird jedoch die Informationsstruktur der Metallplatte nicht von ihrer Rückseite, sondern von ihrer Außenseite ausgelesen.

Die Möglichkeit der Überprüfung der Preßmatrize in einem konventionellen Abspielgerät vereinfacht die Prüfprozedur erheblich und ist vor allem deshalb wirtschaftlich, weil jegliche Pressung von Prüfmustern mit der zu überwachenden Matrize entfällt. Daher ist es vorteilhaft, als Metallplatte einen auf galvanischem Wege vom Mutter-Galvano gewonnenen sogenannten Sohn einzusetzen, der sonst als Preßmatrize dienen würde. Dieser Sohn enthält auch eventuelle, bei den galvanischen Prozessen entstandene Fehler.

Nach einer weiteren Ausgestaltung der Erfindung ist vorgesehen, daß der Klebstoff zur Herstellung eines plattenförmigen Informationsträgers nach der Erfindung ein Cyanacrylat-Kleber ist. Zur Verbindung der die Informationsstruktur enthaltenden Metallplatte und der Grundplatte hat sich ein Cyanacrylat-Kleber als vorteilhaft erwiesen, der die beiden Platten sowohl mechanisch mit genügender Festigkeit miteinander verbindet, wie auch transparent genug ist, um das optische Auslesen der in der Metallplatte vorhandenen Informationsstruktur nicht zu behindern.

Bei einem Verfahren zur Überprüfung der Informationsstruktur eines Galvanos auf Fehler, das eine Zwischenstufe zur Herstellung von optisch auslesbaren plattenförmigen Informationsträgern nachstellt, wobei die Informationsstruktur einer von dem Galvano abgeleiteten Prüfplatte optisch ausgelesen und auf Fehler überprüft wird, ist nach einer weiteren Ausgestaltung der Erfindung vorgesehen, daß als Prüfplatte ein plattenförmiger Informationsträger nach Anspruch 3 eingesetzt wird. Ein solches Verfahren hat vor allem den Vorteil, daß die Fertigung spezieller Prüfplatten entfällt. Damit ist das Verfahren besonders wirtschaftlich und zeitsparend. Darüber hinaus werden Fehler ausgeschlossen, die nach den bekannten Verfahren bei der Fertigung spezieller Prüfplatten entstehen und in dem zu überprüfenden Galvano noch nicht vorhanden sind. Es ist also eine höhere Sicherheit bei der Überprüfung der Informationsstruktur eines Galvanos gegeben.

Nach einer weiteren Ausgestaltung der Erfindung ist bei einem Verfahren zur Herstellung eines plattenförmigen Informationsträgers vorgesehen, daß
-auf die eine Seite der Grundplatte der Klebstoff aufgebracht ist,
-die Metallplatte mit ihrer die Informationsstruktur aufweisenden Seite auf die mit Klebstoff versehene Seite der Grundplatte aufgelegt wird,
-die Metallplatte auf die Grundplatte aufgedrückt wird, wobei der Druck beginnend beim Zentrum der Platte nach und nach auf immer größere Radien der Platte ausgedehnt wird.

In einem derartigen Verfahren wird also zunächst der Klebstoff auf die Grundplatte aufgebracht. Dies kann beispielsweise spiralförmig geschehen, um eine spätere möglichst gleichmäßige Verteilung des Klebstoffes zu gewährleisten. Die Metallplatte wird mit ihrer die Informationsstruktur enthaltenden Seite zunächst nur lose auf die Seite der Grundplatte aufgelegt, auf die der Klebstoff aufgebracht wurde. Anschließend wird die Metallplatte auf die Grundplatte aufgedrückt. Dies geschieht in der Weise, daß zunächst nur auf den Zentrumsbereich der Metallplatte Druck ausgeübt wird. Anschließend wird zusätzlich nach außen wandernd auch auf immer größere Radien der Metallplatte ein Druck ausgeübt. Auf diese Weise wird eine gleichmäßige Verteilung des Klebstoffes zwischen den beiden Platten gewährleistet, da der Klebstoff aus dem Zentrumsbereich heraus in Richtung Außenrand fließt. Darüber hinaus wird auf diese Weise die Bildung von Lufteinschlüssen in der Klebstoffschicht verhindert.

Nach einer weiteren Ausgestaltung der Erfindung ist vorgesehen, daß zum Aufdrücken der Metallplatte auf die Grundplatte ein Tampon-Andruck-Verfahren eingesetzt wird. Tampon-Verfahren sind bekannt zur Aufbringung von Aufdrucken beispielsweise auch auf plattenförmige Informationsträger. Der Einsatz eines Tampon-Verfahrens zum Aufdrücken der Metallplatte auf die mit Klebstoff versehene Grundplatte hat sich als besonders vorteilhaft erwiesen, da bei diesem Verfahren in gewünschter Weise zunächst nur Druck auf den Zentrumsbereich der Platte ausgeübt wird, der sich anschließend zunehmend auch auf größere Durchmesser der Platte erstreckt. Eine zum Aufdrucken von Informationen auf einen Informationsträger vorgesehene Druckmaschine, die nach dem Tampon-Verfahren arbeitet, kann nahezu ohne Änderungen auch für das erfindungsgemäße Verfahren zur Herstellung eines plattenförmigen Informationsträgers eingesetzt werden.

Nach einer weiteren Ausgestaltung der Erfindung ist vorgesehen, daß bei einer Informationsträgerplatte mit Mittelloch vor dem Aufdrücken der Metallplatte auf die Grundplatte beide Platten mittels eines Zentrierstiftes zueinander ausgerichtet werden. Zur Zentrierung der beiden Platten vor ihrem endgültigen Verbinden mittels des Klebstoffes und des anschließenden Aufeinanderdrückens der beiden Platten, ist es vorteilhaft, in die Grundplatte einen Zentrierstift einzusetzen, der gewährleistet, daß die zunächst aufgelegte und dann aufgedrückte und mittels Klebstoff mit der Grundplatte versehene Metallplatte relativ zu der Grundplatte exakt zentriert ist. Dies gilt selbstverständlich nur für den Fall, daß die Informationsträgerplatte ein Mittelloch aufweist.

Die Erfindung wird anhand einiger in den Figuren dargestellter Ausführungsbeispiele näher erläutert. Es zeigen:

Fig. I einen plattenförmigen Informationsträger in Schnittdarstellung,

Fig. 2 einen vergrößerten Ausschnitt II des Informationsträgers nach Fig. I,

Fig. 3 eine Anordnung mit einer Tampon-Druck-Einheit und einer mittels dieser nach dem Verfahren herzustellenden Informationsträgerplatte.

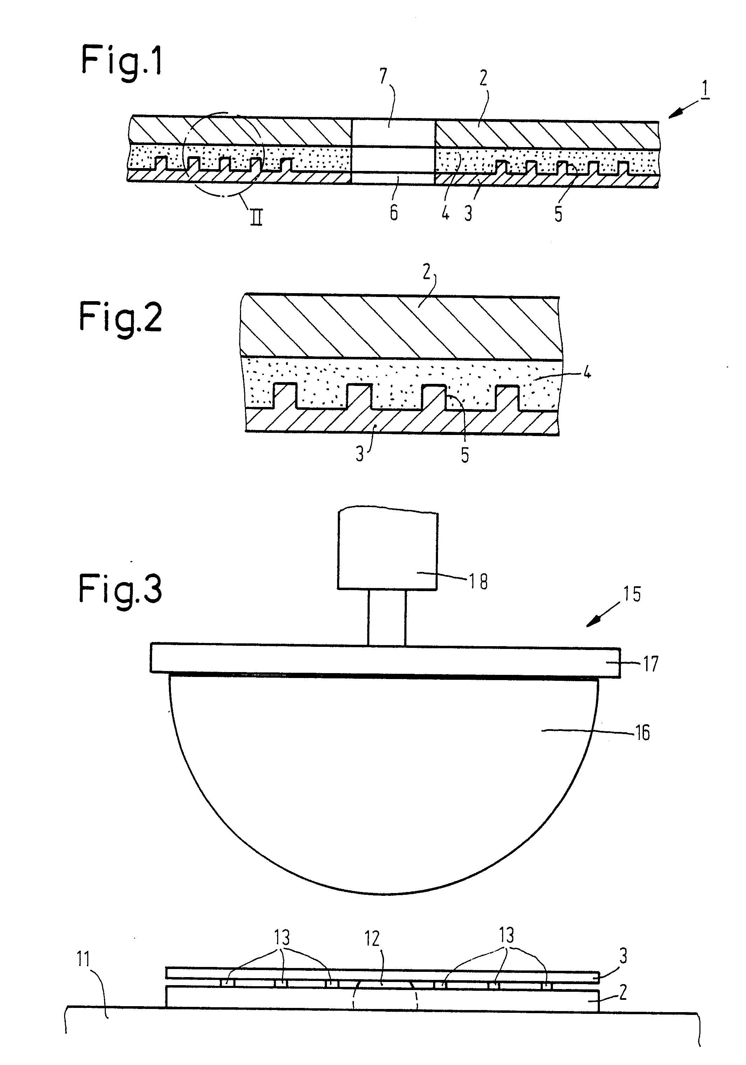

In Fig. I ist ein optisch auslesbarer plattenförmiger Informationsträger I im Schnitt dargestellt. Dieser plattenförmige Informationsträger weist eine transparente Grundplatte 2 und eine Metallplatte 3 auf. Diese beiden Platten sind mittels einer Klebstoffschicht 4 miteinander verbunden. Die Metallplatte weist mit ihrer mit einer Informationsstruktur 5 versehenen Seite zur Klebeschicht hin. Sowohl die transparente Grundplatte, die beispielsweise aus Glas bestehen kann, wie auch de Metallplatte, weisen je ein Mittelloch 6 bzw. 7 auf, die konzentrisch zueinander angeordnet sind. Die Metallplatte wird im Regelfall ein aus Nickel bestehendes Galvano sein, das als Sohn bezeichnet wird. In mehreren galvanischen Prozessen werden von einem Master zunächst ein sogenanntes Vater-Galvano, von diesem ein oder mehrere sogenannte Mutter-Galvanos und von diesen wiederum die Söhne gewonnen, die normalerweise als Preßmatrizen dienen.

Als Metallplatte für den erfindungsgemäßen Informationsträger kann jedes dieser Galvanos eingesetzt werden. Es muß dazu auf die gewünschte Größe zurechtgeschnitten werden und gegebenenfalls mit einem Mittelloch versehen werden. Bei Einsatz des Vater-Galvanos oder eines der Söhne kann ein konventionelles Abspielgerät eingesetzt werden, da diese die Information in negativer Form enthalten.

Ein Auslesen der in der Metallplatte 3 vorhandenen Informationsstruktur 5 geschieht in an sich bekannter Weise mittels eines optischen Ausleselichtstrahles durch die transparente Grundplatte 2 und die ebenfalls transparente Klebstoffschicht 4 hindurch. Da die Informationsstruktur in die Metallplatte 5 eingebracht ist und deren Oberfläche reflektierend ist, wird der Lichtstrahl wieder auf die Ausleseeinheit zurückreflektiert und dort detektiert. Ist die Informationsstruktur 5 in negativer Form vorhanden, so kann die in Fig. I dargestellte Informationsträgerplatte I mit einem konventionellen Abspielgerät, wie konventionelle, mittels einer Preßmatrize in einem Preß-bzw.

Spritzpreßverfahren hergestellte Platten, abgespielt werden, ohne daß an diesem Veränderungen vorgenommen werden müssen. Hierzu ist lediglich zu beachten, daß die Dicke der Grundplatte 2 und der Klebstoffschicht 4 der Dicke der Informationsträgerplatte (Compact Disc) entspricht.

In Fig. 2 ist, ebenfalls in Schnittdarstellung, ein Ausschnitt II der in Fig. I dargestellten Informationsträgerplatte I zu sehen. Die Informationsstruktur 5 der Metallplatte 3 ist hier noch deutlicher erkennbar. Zwischen der mit der Informationsstruktur 5 versehenen Seite der Metallplatte 3 und der transparenten Grundplatte 2 ist eine Klebstoffschicht 4 erkennbar. Die in den Fig. I und 2 dargestellten Größenverhältnisse der beiden Platten und der Klebstoffschicht entsprechen nicht den tatsächlichen Größenverhältnissen und sind lediglich der Deutlichkeit halber vergrößert. Die Klebstoffschicht ist im allgemeinen relativ dünn gehalten, während die transparente Grundplatte im Verhältnis zu den Vertiefungen der Informationsstruktur 5 wesentlich dicker ist als in den Fig. I und 2 dargestellt.

In Fig. 3 ist eine Anordnung mit einer plattenförmigen Informationsträgerplatte und einer Tampon-Druck-Einheit dargestellt, die eine Herstellung der Informationsträgerplatte mittels des erfindungsgemäßen Verfahrens gestattet. Auf eine Basishalterung II ist eine transparente Grundplatte 2 für einen optisch auslesbaren Informationsträger aufgelegt. In das in der Figur nicht näher dargestellte Mittelloch ist ein sich geringfügig konisch nach oben verjüngender Zentrierstift I2 eingesetzt. Auf die transparente Grundplatte 2 sind einige Tropfen bzw. Bahnen von Klebstoff I3 aufgebracht. Auf die mit dem Klebstoff versehene Oberfläche der transparenten Grundplatte 2 ist eine Metallplatte 3 aufgelegt, die mit ihrer in der Fig. 3 nicht näher dargestellten Informationsseite zu der Grundplatte 2 hinweist. Dabei ist der Zentrierstift I2 in das in der Fig. 3 nicht dargestellte Mittelloch der Metallplatte 3 eingeführt.

Oberhalb der Metallplatte 3 ist eine Tampon-Druck-Einheit I5 dargestellt. Die Tampon-Druck-Einheit I5 weist ein gewölbtes elastisches Druckkissen I6 auf, welches zu der Metallplatte 3 hinweist. Das Druckkissen I6 ist mit einer festen Grundplatte I7 versehen, welche an einer in der Figur nicht näher dargestellten Druckvorrichtung I8 befestigt ist.

Beim Aufdrücken der Metallplatte 3 auf die mit dem Klebstoff I3 versehene Grundplatte 2 wird das elastische Druckkissen I6 mittels der Druckvorrichtung I8 auf die Metallplatte 3 heruntergefahren. Dabei wird zunächst auf den zentralen Bereich der Metallplatte 3 ein Druck ausgeübt, da das Druckkissen I6 zunächst nur in diesem Bereich auf die Metallplatte 3 drückt. Anschließend wird das Druck-

kissen 16 weiter heruntergefahren, so daß es immer mehr auch auf Bereiche größeren Durchmessers der Metallplatte einen Druck ausübt. Der Klebstoff 13 zwischen den Metallplatten 2 und 3 wird dabei zwischen den Platten verteilt und fließt von dem Bereich des Zentrums der Platte heraus in Richtung Außenrand. Auf diese Weise wird eine gleichmäßige Klebstoffschicht erzeugt. Infolge dieses Fließens und des auf die Metallplatte 3 ausgeübten Druckes entstehen dabei keine Lufteinschlüsse in der Klebstoffschicht.

Das Zusammendrücken der Metallplatte und der Grundplatte kann selbstverständlich auch auf andere Art und Weise geschehen, jedoch hat sich ein Zusammendrücken mittels einer an sich bekannten Tampon-Druck-Vorrichtung als besonders vorteilhaft erwiesen, da diese eine besonders geeignete Verteilung des Druckes beim Zusammenpressen der Platten aufweist.

**Ansprüche**

1. Optisch auslesbarer plattenförmiger Informationsträger, der eine transparente Grundplatte und eine Informationsstruktur aufweist, die durch die Grundplatte hindurch in Reflektion auslesbar ist, dadurch gekennzeichnet, daß die Informationsstruktur in einer galvanisch hergestellten Metallplatte vorgesehen ist und daß die Metallplatte mit ihrer die Informationsstruktur aufweisenden Seite auf die Grundplatte aufgeklebt ist.

2. Plattenförmiger Informationsträger nach Anspruch 1, dadurch gekennzeichnet, daß die Grundplatte aus Glas besteht.

3. Plattenförmiger Informationsträger nach Anspruch 1 oder Anspruch 2, dadurch gekennzeichnet, daß die Metallplatte in auf galvanischem Wege von einem Master gewonnenes Galvano ist.

4. Plattenförmiger Informationsträger nach einem oder mehreren der Ansprüche 1 bis 3, dadurch gekennzeichnet, daß die Metallplatte eine Preßmatrize ist, die die Informationsstruktur in negativer Form aufweist.

5. Plattenförmiger Informationsträger nach einem oder mehreren der Ansprüche 1 bis 4, dadurch gekennzeichnet, daß der Klebstoff ein Cyanacrylat-Kleber ist.

6. Verfahren zur Überprüfung der Informationsstruktur eines Galvanos auf Fehler, das eine Zwischenstufe zur Herstellung von optisch auslesbaren plattenförmigen Informationsträgern darstellt, wobei die Informationsstruktur einer von dem Galvano abgeleiteten Prüfplatte optisch ausgelesen und auf Fehler überprüft wird, dadurch gekennzeichnet, daß als Prüfplatte ein plattenförmiger Informationsträger nach Anspruch 3 eingesetzt wird.

7. Verfahren zur Herstellung eines plattenförmigen Informationsträgers nach einem oder mehreren der Ansprüche 1 bis 6, dadurch gekennzeichnet, daß
-auf die eine Seite der Grundplatte der Klebstoff aufgebracht ist,
-die Metallplatte mit ihrer die Informationsstruktur aufweisenden Seite auf die mit Klebstoff versehene Seite der Grundplatte aufgelegt wird,
-die Metallplatte auf die Grundplatte aufgedrückt wird, wobei der Druck beginnend beim Zentrum der Platte auf immer größere Radien der Platten ausgedehnt wird.

8. Verfahren nach Anspruch 7, dadurch gekennzeichnet, daß zum Aufdrücken der Metallplatte auf die Grundplatte ein Tampon-Druck-Verfahren eingesetzt wird.

9. Verfahren nach Anspruch 7 oder Anspruch 8, dadurch gekennzeichnet, daß bei einer Informationsträgerplatte mit Mittelloch vor dem Aufdrücken der Metallplatte auf die Grundplatte beide Platten mittels eines Zentrierstiftes zueinander ausgerichtet werden.

# Fig.1

7    2    1

II

6   4   3    5

# Fig.2

2

4

3    5

# Fig.3

18

15

17

16

11

13    12    13    3

2

PHD 86-108